Europäisches Patentamt

European Patent Office

Office européen des brevets

(11) Veröffentlichungsnummer: **0 504 553 A2**

# EUROPÄISCHE PATENTANMELDUNG

(21) Anmeldenummer: **92101063.3**

(22) Anmeldetag: **23.01.92**

(51) Int. Cl.5: **B29C 45/23**

(30) Priorität: **20.03.91 DE 4109122**

(43) Veröffentlichungstag der Anmeldung:
**23.09.92 Patentblatt 92/39**

(84) Benannte Vertragsstaaten:
**AT CH DE ES FR GB IT LI NL**

(71) Anmelder: **Hehl, Karl**
**Arthur-Hehl-Strasse 32**
**W-7298 Lossburg 1(DE)**

(72) Erfinder: **Hehl, Karl**
**Arthur-Hehl-Strasse 32**
**W-7298 Lossburg 1(DE)**

(74) Vertreter: **Mayer, Friedrich, Dr.**
**Patentanwälte Dr. Mayer & Frank Westliche 24**
**W-7530 Pforzheim(DE)**

(54) **Düse am Plastifizierzylinder einer Kunststoff-Spritzgiesseinheit.**

(57) Der Mündungsabschnitt (11b) des Düsenkanals (11) der Düse ist von der inneren Mantelfläche eines Düsenmundstückes (12) begrenzt. Dieses Düsenmundstück ist an den Düsenkörper (10) mittels eines Spannringes (16) axial anpreßbar. Der Spannring hintergreift das Düsenmundstück (12) und umschließt einen Endabschnitt des Düsenkörpers (10) geringeren Durchmessers. Der Anpreßdruck des Düsenmundstückes (12) ist mit Hilfe wenigstens eines Gewindeelementes erzeugbar

FIG. 1

EP 0 504 553 A2

Die Erfindung betrifft eine Düse entsprechend dem Oberbegriff des Patentanspruches 1.

Eine einstückige Düse dieser Art, bei welcher der Düsenkörper unmittelbar an die Spritzgießform anlegbar ist, ergibt sich aus der DE 37 445 19 als bekannt.

Bekannt ist auch eine Spritzgießeinrichtung zum Herstellen von Gegenständen aus Kunststoff, insbesondere von Behältern, in welcher Einrichtung die Mittel zum Plastifizieren des Kunststoffes und die Spritzgießform zu einer kompakten baulichen Einheit zusammengefaßt sind. Der plastifizierte Kunststoff gelangt über einen abgewinkelten Kanal und eine radialsymmetrische, in die Angußöffnung der Spritzgießform eintauchenden Düse in den Formhohlraum. Die extrem gering dimensionierte Düse verbindet den in einen Stahlblock gebohrten Zuflußkanal mit dem Formhohlraum. Die Düsennadel erstreckt sich in Schließstellung bis in die Mündungsöffnung der Düse und begrenzt somit den Formhohlraum unmittelbar. Bei einer solchen bekannten Spritzgießeinrichtung, die zur Verarbeitung von homogenen Kunststoffen gebraucht wird, ist ein relativ guter Düsenverschluß über verhältnismäßig lange Betriebszeiten zu erwarten. In neuerer Zeit werden jedoch den Kunststoffen zunehmend auch abrasive Zusätze wie Glasfasern, Kohlenstoffe und solche mineralischer Herkunft beigemischt, um weitere Anwendungsgebiete für Spritzteile z.B. im Maschinenbau oder in der Feinwerktechnik zu erschließen. Solche Spritzteile können z.B. extrem hohen mechanischen Beanspruchungen oder Temperaturen standhalten. Oftmals sind auch spezifische Eigenschaften mit Bezug auf die elektrische Leitfähigkeit gefordert.

Langzeitversuche haben ergeben, daß im Falle der Verarbeitung von Kunststoffen mit solchen abrasiven Zusätzen bei längerer Betriebszeit ernstere Probleme hinsichtlich der Dichtheit des Düsenverschlusses auftreten können. Dies ist vor allem der Fall, wenn in dem als Sitz dienenden Bereich des Mündungsabschnittes des Düsenkanals und im Bereich des freien Endes der Düsennadel asymmetrische Abrasionen auftreten, welche die Radialsymmetrie dieses Sitzes und dieses freien Endes beeinträchtigen.

Der Erfindung liegt die Aufgabe zugrunde, eine Düse der eingangs genannten Gattung derart weiterzubilden, daß solche, insbesondere bei Verwendung von abrasiven Stoffmischungen insbesondere nach längeren Betriebszeiten, auftretenden Undichtigkeiten minimiert oder gar ganz vermieden werden können.

Diese Aufgabe wird erfindungsgemäß durch eine Düse mit den Merkmalen des Patentanspruches 1 gelöst.

Bei einer solchen Ausbildung bleibt dank der extremen Werkstoffhärte des Düsenmundstückes die Radialsymmetrie der Düsennadel und ihres Sitzes auch bei starker Betriebsbeanspruchung über längere Zeiten weitgehend erhalten. Dies gilt auch für Düsenmundstücke geringerer Härte aus gesinlerten Werkstoffen extrem hoher Verschleißfestigkeit, die z.B. Carbide enthalten. Im Falle eines Düsenmundstückes aus Keramik ist dessen geringe Wärmeleitfähigkeit von Vorteil, die eine weitgehende Wärmeisolierung zwischen Düse und Spritzgießform zur Folge hat.

Darüber hinaus liegen die prinzipiellen Voraussetzungen dafür vor, daß die Düsennadel bei jedem Schließvorgang (Ausführungsbeispiel der Figuren 1 und 2) automatisch oder durch eine Justiermanipulation (Ausführungsbeispiel der Figuren 3, 4) auf ihren Sitz zentrierbar ist. Bei dieser Justiermanipulation wird zunächst die Vorspannung des Gewindeelementes aufgehoben. Danach wird die Düsennadel in Schließstellung gefahren. Dabei bewirkt die Düsennadel eine geringfügige Radialverschiebung des Düsenmundstückes im Sinne einer Zentrierung an der Düsennadel. Nach Vollzug der Zentrierung kann das Düsenmundstück in zentrierter Position mit Hilfe des Gewindeelements erneut axial auf den Düsenkörper aufgepreßt werden.

Es hat sich auch gezeigt, daß manche abrasiv bedingte Undichtigkeiten des Düsenverschlusses dadurch behebbar sind, daß man unter Aufhebung der axialen Vorspannung des Spannringes das Düsenmundstück mehr oder weniger dreht. Dadurch können sich Abweichungen von der Radialsymmetrie am Ventilsitz bzw. am Schließende der Düsennadel neu formieren und gegenseitig neutralisieren, wenn sie einander entgegengesetzt sind.

Nachstehend wird die Erfindung anhand der Zeichnung an einem Ausführungsbeispiel erläutert. Es zeigen:

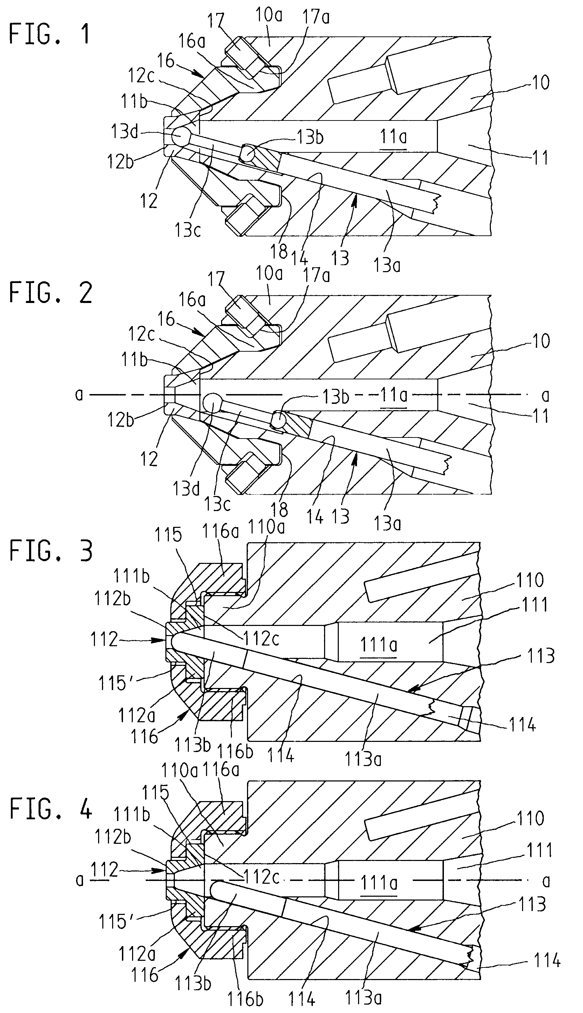

Fig. 1, 2    die Düse in einem durch die Düsenachse a-a gehenden vertikalen Schnitt in Schließ- und Offenstellung und

Fig. 3, 4    eine Variante der Düse in einer Darstellung gemäß den Figuren 1, 2.

Beiden Ausführungsbeispielen ist folgendes gemeinsam:

Die Düse ist mit dem Plastifizierzylinder einer axial verfahrbaren Kunststoff-Spritzgießeinheit lösbar verbunden. Mit Hilfe des axialen Antriebes der Kunststoff-Spritzgießeinheit kann der Plastifizierzylinder mit der Düse bei jedem Spritzzyklus wechselweise bis zur Anlage an der Spritzgießform vorgefahren und danach wieder auf Abstand zurückgefahren werden. Die Düse ist aus einem zum Plastifizierzylinder koaxialen Düsenkörper 10 bzw. 110 aus Stahl mit einem Düsenmundstück 12, 112 aus Keramik oder Hartmetall aufgebaut. Der Düsenkanal 11 bzw. 111 des Düsenkörpers 10, 110 weist in einem Endabschnitt 11a bzw. 111a einen sich verjüngenden Mündungsabschnitt 11b bzw. 111b auf. Eine Düsennadel 13 bzw. 113 schließt zur Düsenachse a-a einen spitzen Winkel ein. Die Düsennadel 13 bzw. 113 ist in einer Bohrung 14 bzw. 114 des Düsenkörpers geführt und nach Programm in Offen- und Schließstellung steuerbar. Der Düsenkanal 11 bzw. 111 ist in der Bohrung 14 bzw. 114 im Endabschnitt 11a bzw. 111a im Abstand vom Mündungsabschnitt 11b bzw. 111b angeschnitten. Der Mündungsabschnitt 11b bzw. 111b des Düsenkanals 11 bzw. 111 ist von der inneren Mantelfläche des radialsymmetrischen Düsenmundstückes 12 bzw. 112 begrenzt. Dieses Düsenmundstück ist mittels eines Spannringes 16 bzw. 116 an den Düsenkörper 10 bzw. 110 anpreßbar. Der Spannring umgreift das Düsenmundstück 12 bzw. 112 und umschließt einen Endabschnitt des Düsenkörpers 10 bzw. 110 geringeren Durchmessers mit einem Axialflansch 16a bzw. 116a. Dabei liegt das Düsenmundstück über eine plane, senkrecht zur Düsenachse a-a stehende, fein bearbeitete Ringfläche an einer korrespondierenden Ringfläche des Düsenkörpers dichtend an. Im Ausführungsbeispiel der Fig. 1 und 2 stehen mehrere Gewindebolzen mit einem den Axialflansch 16a des Spannringes 16 umschließenden Axialflansch 10a des Düsenkörpers 10 im Gewindeeingriff. Die Gewindebolzen 17 liegen mit ihren Stirnflächen 17a an Preßflächen des Spannringes 16 unter Vorspannung an, um das Düsenmundstück 12 an den Düsenkörper 10 axial anzupressen. Die Düsennadel 13 ist aus zwei miteinander gelenkig verbundenen Teilstücken aufgebaut. Das rückwärtige stabartige Teilstück 13a ist in einer Bohrung 14 des Düsenkörpers 10 geführt. Das vordere Teilstück der Düsennadel 13 ist mit dem rückwärtigen Teilstück 13a über ein Kugelgelenk 13b verbunden. In Schließstellung ist es mit einem kugeligen Schließkörper 13d an der als Ventilsitz dienenden inneren Mantelfläche des Mündungsabschnittes 11b des Düsenkanals 11 dichtend aufgepreßt. Das vordere, in den Schließkörper 13d und in eine Kugel des Kugelgelenks 13b auslaufende zylindrische Teilstück 13c weist einen Durchmesser auf, der etwa dem halben Durchmesser des rückwärtigen zylindrischen Teilstückes 13a entspricht. Dadurch ist das vordere Teilstück 13c der Düsennadel 13 vollständig vom Kunststoff umspült, so daß ein allseitiger Druckausgleich gewährleistet ist, also dieses Teilstück keinen einseitigen radialen Drücken beim Einspritzen des Kunststoffmaterials ausgesetzt ist.

Beim Ausführungsbeispiel der Figuren 3, 4 steht der Spannring 116 mit einem Innengewinde 116b seines Axialflansches 116a mit einem Außengewinde des Endabschnittes 110a geringeren Durchmessers des Düsenkörpers 110 im Eingriff. Das Düsenmundstück 112 ist im Bereich eines Radialflansches 112a vom Spannring 116 hintergriffen. Zwischen den äußeren zylindrischen Mantelflächen des Düsenmundstückes 112 und den gegenüberliegenden inneren Mantelflächen des Spannringes 116 sind Ringspalte 115, 115' derart gebildet, daß bei nicht vorgespanntem Spannring eine Radialverschiebung des Düsenmundstückes 112 möglich ist. Die Düsennadel 113 ist aus zwei starr miteinander verbundenen Teilstücken 113a, 113b aufgebaut, von welchen das rückwärtige Teilstück 113a in der Bohrung 114 geführt ist. Das vordere Teilstück 113b ist in Schließstellung mit einer kugeligen Stirnfläche an der als Ventilsitz dienenden inneren Mantelfläche des sich verjüngenden Mündungsabschnittes 111b angepreßt.

Liste der Bezugszeichen (kein Bestandteil der Anmeldungsunterlagen)

| | |
|---|---|
| 10, 110 | Düsenkörper |
| 11, 111 | Düsenkanal |
| 11a, 111a | Endabschnitt |
| 11b, 111b | Mündungsabschnitt |
| 11c, 111c | Düsenmündung |
| 12, 112 | Düsenmundstück |
| 112a | Radialflansch (Fig. 3) |
| 12b, 112b | Anlagefläche |
| 13, 113 | Düsennadel |
| 13a, 113a | rückwärtiges Teilstück |
| 13b | Kugelgelenk |
| 113b | vorderes Teilstück in Fig. 3 |
| 13c | vorderes Teilstück in Fig. 1 |
| 13d | kugeliger Schließkörper (Fig. 1) |
| 14, 114 | Bohrung in 10, 11 |
| 115, 115' | Ringspalte |

**Patentansprüche**

1. Düse am Plastifizierzylinder einer axial verfahrbaren KunststoffSpritzgießeinheit mit einem zum Plastifizierzylinder koaxialen Düsenkörper (10,110) aus Stahl, dessen Düsenkanal (11,111) in einem Endabschnitt (11a,111a) einen sich verjüngenden Mündungsabschnitt (11b,111b) aufweist, und mit einer Düsennadel (13,113), die zur Düsenachse (a-a) einen spitzen Winkel einschließt, in einer Bohrung (14,114) des Düsenkörpers (10,110) geführt und nach Programm in Offen- und Schließstellung steuerbar ist, wobei der Düsenkanal (11,111) von der Bohrung (14,114) im Endabschnitt (11a,111a) im Abstand vom Mündungsabschnitt (11b,111b) angeschnitten ist, dadurch gekennzeichnet, daß der Mündungsabschnitt (11b,111b) des Düsenkanals (11,111) von der inneren Mantelfläche eines gesonderten, etwa radialsymmetrischen Düsenmundstückes (12,112) begrenzt ist, das aus einem Werkstoff besteht, dessen Härte die Härte des Düsenkörpers (10,110) übersteigt, und das an den Düsenkörper (10,110) mittels eines Spannringes (16,116) axial anpreßbar ist, welcher das Düsenmundstück (12,112) hintergreift und einen Endabschnitt des Düsenkörpers (10,110) geringeren Durchmessers umschließt, wobei der Anpreßdruck des Mundstückes (12,112) mit Hilfe wenigstens eines Gewindeelementes erzeugbar ist, das mit einem Gewinde des Düsenkörpers (10,110) in Eingriff steht.

2. Düse nach Anspruch 1, dadurch gekennzeichnet, daß das aus Keramik oder Hartmetall bestehende Düsenmundstück (12,112) über eine plane, senkrecht zur Düsenachse (a-a) stehende, fein bearbeitete Ringfläche an einer korrespondierenden Ringfläche des Düsenkörpers (10,110) dichtend anliegt.

3. Düse nach Anspruch 1 oder 2, dadurch gekennzeichnet, daß mehrere als Gewindebolzen (17) ausgebildete Gewindeelemente mit einem den Axialflansch (16a) des Spannringes (16) umschließenden Axialflansch (10a) im Gewindeeingriff stehen und mit Stirnflächen (17a) an Preßflächen des Spannringes (16) anliegen (Fig. 1,2).

4. Düse nach Anspruch 3, dadurch gekennzeichnet, daß die Düsennadel (13) aus mindestens zwei miteinander gelenkig verbundenen Teilstücken aufgebaut ist, von welchen das rückwärtige, stabartige Teilstück (13a) in der Bohrung (14) des Düsenkörpers (10) geführt ist.

5. Düse nach Anspruch 4, dadurch gekennzeichnet, daß das vordere Teilstück der Düsennadel (13) mit dem rückwärtigen Teilstück (13a) über ein Kugelgelenk (13b) verbunden ist und in Schließstellung mit einem kugeligen Ende (13d) an der für dieses Ende als Sitz dienenden Mantelfläche des Mündungsabschnittes (11b) des Düsenkanals (11) dichtend aufgepreßt ist.

6. Düse nach Anspruch 4 oder 5, dadurch gekennzeichnet, daß das vordere, in den Schließkörper (13d) und in eine Kugel des Kugelgelenkes (13b) auslaufende zylindrische Teilstück (13c) einen Durchmesser aufweist, der etwa dem halben Durchmesser des zylindrischen Teilstückes (13a) entspricht.

7. Düse nach Anspruch 1 oder 2, dadurch gekennzeichnet, daß der als Gewindeelement dienende Spannring (116) mit einem Innengewinde (116b) seines Axialflansches (116a) mit einem Außengewinde des Endabschnittes

(110a) geringeren Durchmessers des Düsenkörpers (110) im Eingriff steht (Fig. 3,4).

8. Düse nach einem der Ansprüche 1,2,7, dadurch gekennzeichnet, daß das Düsenmundstück (112) im Bereich eines Radialflansches (112a) vom Spannring (116) hintergriffen ist.

9. Düse nach Anspruch 8, dadurch gekennzeichnet, daß zwischen den äußeren zylindrischen Mantelflächen des Düsenmundstückes (112) und den gegenüberliegenden inneren Mantelflächen des Spannringes (116) Ringspalte (115',115) derart gebildet sind, daß bei nicht vorgespanntem Spannring eine Radialverschiebung des Düsenmundstückes (112) möglich ist.

10. Düse nach einem der Ansprüche 1,6-9, dadurch gekennzeichnet, daß die Düsennadel (113) aus zwei starr miteinander verbundenen Teilstücken (113a,113b) aufgebaut ist, von welchen das rückwärtige Teilstück (113a) in der Bohrung (114) geführt und das vordere Teilstück (113b) in Schließstellung mit einer kugeligen Stirnfläche an der für diese Stirnfläche als Sitz dienende Mantelfläche des sich verjüngenden Mündungsabschnittes (111b) angepreßt ist.

FIG. 1

FIG. 2

FIG. 3

FIG. 4